(19) Europäisches Patentamt

European Patent Office

Office européen des brevets

(11) EP 0 583 181 B1

## (12) FASCICULE DE BREVET EUROPEEN

(45) Date de publication et mention
de la délivrance du brevet:
**01.10.1997 Bulletin 1997/40**

(51) Int. Cl.⁶: **B23K 26/00**

(21) Numéro de dépôt: **93401760.9**

(22) Date de dépôt: **06.07.1993**

(54) **Procédé et dispositif de soudage bord à bord de tôles au moyen d'un faisceau laser**

Verfahren und Einrichtung zum Laserstahlschweissen von auf Stoss geführten Stahlblechen

Process and arrangement for butt welding steel sheets using a laser beam welding process

(84) Etats contractants désignés:
**AT BE CH DE DK ES FR GB GR IT LI LU NL PT SE**

(30) Priorité: **04.08.1992 FR 9209669**

(43) Date de publication de la demande:
**16.02.1994 Bulletin 1994/07**

(73) Titulaire: **SOLLAC**
**92800 Puteaux (FR)**

(72) Inventeur: **Guth, Jérôme**
**F-59140 Dunkerque (FR)**

(74) Mandataire: **Lanceplaine, Jean-Claude et al**
**CABINET LAVOIX**
**2, Place d'Estienne d'Orves**
**75441 Paris Cédex 09 (FR)**

(56) Documents cités:
**EP-A- 0 151 848** **EP-A- 0 306 036**

• **PATENT ABSTRACTS OF JAPAN vol. 14, no. 375 (M-1010) 4318 14 Août 1990 & JP-A-2 137 685 (MITSUBISHI ELECTRIC CORP.) 25 Mai 1990**

## Description

La présente invention a pour objet un procédé de soudage bord à bord de tôles au moyen d'un faisceau laser.

Le soudage bord à bord de tôles au moyen d'un faisceau laser demande de très hautes exigences de précision, de forme et de position des tôles à souder.

En effet, la qualité du joint soudé dépend en grande partie de la précision dans la position des tôles et dans la qualité du contact au niveau du plan de joint entre lesdites tôles.

Si la qualité du contact au niveau du plan de joint entre les tôles à souder est incorrect, c'est à dire si le jeu entre les tôles à souder est trop important, il peut arriver que le plan de joint ne soit pas continu et présente des trous.

Par ailleurs, lorsque le jeu entre les tôles au niveau du plan de joint est localement trop important, il arrive que le joint soudé présente, sur certaines zones, un effondrement.

Un tel effondrement du plan de joint est toléré s'il ne dépasse pas certaines limites.

Ainsi, par exemple les normes définies par les constructeurs automobiles imposent que pour des tôles dont l'épaisseur est inférieure à 1mm, la valeur totale de l'effondrement du joint soudé, c'est à dire le cumul de la valeur de l'effondrement en partie supérieure et en partie inférieure des tôles, ne dépasse pas 20% de l'épaisseur de la tôle de plus faible épaisseur.

De même, pour des tôles d'épaisseur supérieure à 1mm, la valeur totale de l'effondrement du joint soudé ne doit pas dépasser 10% de l'épaisseur de la tôle de plus faible épaisseur.

Pour limiter ces risques de joint non continu ou d'effondrement trop important, jusqu'à présent on améliore la qualité du cisaillage des tôles afin de limiter les ondulations des arêtes de coupe et d'assurer un meilleur contact des tôles entre elles pour mieux maîtriser le jeu entre lesdites tôles.

Mais, pour obtenir un tel résultat, il est nécessaire d'investir dans des cisailles très précises, de coût important ou d'utiliser des cisailles doubles permettant de couper simultanément, avec la même lame, les deux flans de tôle à rabouter.

Une autre solution consiste à préparer les flans de tôles à souder au moyen d'un faisceau laser.

Le document EP-A1-0 151 848 qui représente l'état de la technique le plus proche décrit un procédé de soudage bord à bord de tôles au moyen d'un faisceau laser, dans lequel on exerce sur les tôles à souder un effort en direction du plan de joint pour déplacer les tôles l'une par rapport à l'autre et on réalise un joint soudé.

La présente invention a pour but de proposer un procédé de soudage bord à bord de tôles au moyen d'un faisceau laser, permettant d'assurer un jeu minimal au niveau du plan de joint des tôles afin d'obtenir une bonne qualité du joint soudé, même lorsque les tôles sont cisaillées séparément à l'aide d'une cisaille dite standard.

La présente invention a donc pour objet un procédé de soudage tel que défini dans la revendication 1.

Selon d'autres caractéristiques de l'invention :

- la pression de contact entre lesdites tôles est variable selon le point où elle s'exerce par rapport aux extrémités du plan de joint desdites tôles,
- la pression entre les tôles a une valeur plus importante aux points du plan de joint présentant un jeu important qu'une valeur aux points pour lesquels le jeu est minimum ou nul,
- la pression de contact entre les tôles a une valeur minimale à proximité des extrémités du plan de joint desdites tôles et une valeur maximale à proximité du centre dudit plan de joint,
- la pression minimale est égale à 0,05 fois la limite élastique de la tôle ayant la plus faible limite élastique et la pression maximale est égale à la pression de flambement de la tôle ayant la pression de flambement minimale.

Les caractéristiques et avantages de la présente invention apparaîtront au cours de la description qui va suivre, donnée à titre d'exemple, faite en référence aux dessins annexés, dans lesquels :

- la Fig. 1 est une vue schématique en perspective de deux tôles à souder bord à bord,
- la Fig. 2 est un diagramme montrant un exemple de répartition de la pression de contact entre les tôles au niveau du plan de joint, selon le procédé de l'invention,
- la Fig. 3 est une vue schématique d'un exemple de réalisation d'un dispositif de soudage selon la présente invention.

Le procédé selon la présente invention consiste à souder au moins deux tôles 1 et 2 bord à bord au moyen d'un faisceau laser non représenté.

Le procédé consiste à exercer sur les tôles 1 et 2 à souder, une pression latérale F dirigée vers le plan de joint 3 desdites tôles de telle sorte que la pression de contact P qui s'exerce au niveau dudit plan le joint 3, sur les faces latérales 4 et 5 en contact, soit comprise entre 0,05 Re et Pf, Re étant la limite élastique de la tôle 1 ou 2 ayant la plus faible limite élastique et Pf étant la pression limite de flambement de la tôle 1 ou 2 ayant la pression limite de flambement minimale.

En effet, si la pression latérale F exercée sur les tôles 1 et 2 est trop faible pour que la pression de contact P atteigne la valeur limite de 0,05 Re, le contact entre les tôles 1 et 2 au niveau du plan de joint 3 n'est pas de qualité suffisante pour obtenir, après soudage, un joint soudé satisfaisant.

De même, si l'effort F est trop important entraînant une pression de contact P entre les deux tôles 1 et 2 supérieure à la pression limite de flambement de la tôle 1 ou 2 ayant la pression limite de flambement la plus faible, il se produit un flambement des tôles et, après soudage, le joint soudé est décalé, voire impossible à réaliser.

La pression limite de flambement Pf des tôles 1 et 2 dépend des caractéristiques mécaniques desdites tôles et de la longueur libre située en dehors des mors de serrage.

Par exemple, dans le cas du soudage de deux tôles d'épaisseur de 0,8mm en acier doux bas carbone pour une utilisation dans les véhicules automobiles, ayant une limite élastique égale à 170 MPa, la pression de contact à exercer au niveau du plan de joint 3 doit être comprise dans l'intervalle suivant :

$$8,5MPa < P < 15MPa$$

Avantageusement, le procédé de soudage selon l'invention consiste à exercer sur les tôles 1 et 2, une pression latérale F dirigée vers le plan de joint 3 desdites tôles de telle sorte que la pression de contact P entre les tôles 1 et 2, au niveau du plan de joint 3, soit variable selon le point où elle s'exerce par rapport aux extrémités 6 et 7 dudit plan de joint 3.

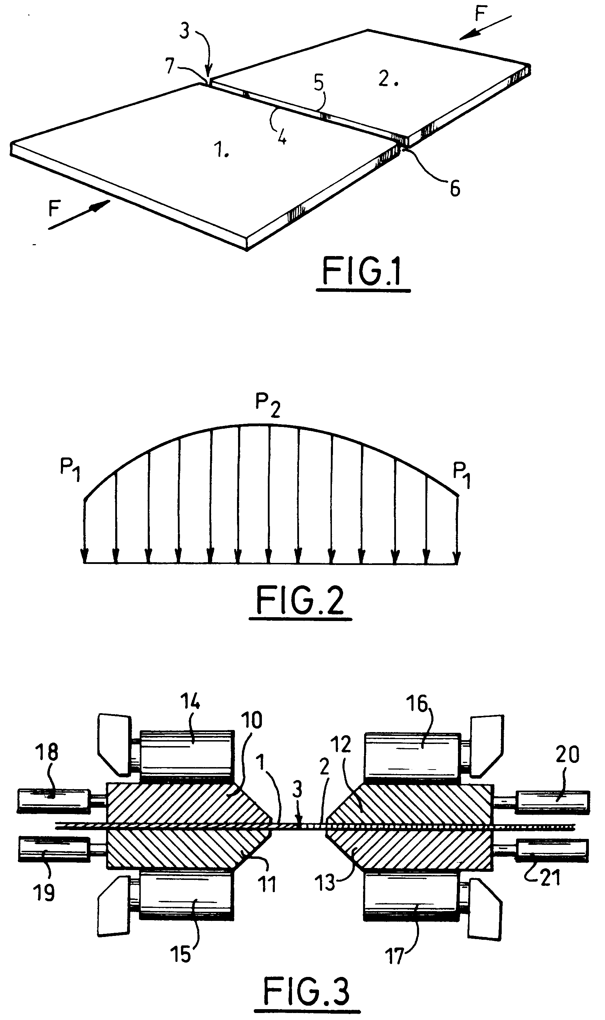

La valeur minimale P1 de la pression P s'exerce au voisinage des extrémités 6 et 7 du plan de joint 3 et la valeur maximale P2 s'exerce dans la zone centrale de ce plan de joint 3 (Fig. 2).

Dans le cas limite de la répartition des pressions de contact P au niveau du plan de joint 3, la valeur de la pression minimale P1 s'exerçant au voisinage des extrémités 6 et 7 de ce plan de joint est égale à 0,05 Re et la valeur de la pression maximale P2 au voisinage du centre du plan de joint 3 est égale à Pf.

Cette répartition variable des pressions de contact entre les tôles 1 et 2 au niveau du plan de joint 3 permet de minimiser le risque de flambement de ces tôles, car, ce flambement s'amorce souvent par les bords des tôles du fait des déformations et des éventuelles blessures que subissent lesdites tôles lors de leur stockage et de leur transport.

De plus, cette répartition variable des pressions de contact permet d'assurer une qualité du contact entre les tôles 1 et 2 plus constante sur toute la longueur du plan de joint 3.

En effet, l'opération de cisaillage des tôles induit des libérations de contrainte au niveau du centre des tôles cisaillées.

Ces libérations de contrainte peuvent entraîner un retrait de la tôle à ce niveau, donc au centre de la tôle cisaillée et ainsi des jeux résiduels importants à cet endroit.

Dans le cas où l'installation de soudage comporte un dispositif de contrôle de l'accostage permettant de localiser au niveau du plan de joint 3 les points pour lesquels le jeu est le plus important, la présente invention permet d'exercer une pression P entre les tôles 1, 2 d'une valeur P2 plus importante aux points du plan de joint présentant un jeu important qu'une valeur P1 aux points pour lesquels le jeu est minimum ou nul.

La présente invention concerne également un dispositif de soudage bord à bord de tôles au moyen d'un faisceau laser.

Ce dispositif comporte des moyens de mise en pression latérale, dirigée vers le plan de joint 3 des tôles 1 et 2 à souder.

Ces moyens sont constitués par au moins trois organes, distincts ou non, permettant d'exercer une pression de contact minimale P1 à proximité des extrémités 6 et 7 du plan de joint 3 et une pression de contact maximale P2 à proximité du centre dudit plan de joint 3.

Dans l'exemple de réalisation représenté à la Fig. 3, chaque tôle 1 et 2 à souder est maintenue au moyen de patins 10, 11, 12 et 13 en contact avec la face supérieure et inférieure de chaque tôle 1 et 2, respectivement 10 et 11 pour les faces supérieure et inférieure de la tôle 1 et 12 et 13 pour les faces supérieure et inférieure de la tôle 2.

La mise en pression verticale des patins 10, 11, 12 et 13 est réalisée par des rouleaux d'appui respectivement 14, 15, 16 et 17.

Les moyens de mise en pression latérale des tôles 1 et 2 sont constitués par exemple par des vérins, respectivement 18, 19, 20 et 21 solidaires des patins respectivement 10, 11, 12 et 13.

D'une manière générale, l'installation de soudage est constituée de chaînes de patins 10, 11, 12 et 13, chaque vérin 18, 19, 20 et 21 se déplaçant avec les patins 10, 11, 12 et 13.

Chaque tôle 1 ou 2 est maintenue par au moins trois jeux de patins pendant son déplacement vers le faisceau laser, non représenté, deux jeux de patins d'extrémité exerçant par l'intermédiaire de leurs vérins, un effort calculé pour obtenir une pression de contact minimale P1 à proximité des extrémités du plan de joint 3 et un jeu de patins central exerçant par l'intermédiaire de ses vérins, un effort calculé pour obtenir une pression de contact maximale P2 à proximité du centre dudit plan de joint 3.

Le procédé de soudage bord à bord de tôles au moyen d'un faisceau laser selon la présente invention permettent d'assurer un jeu minimal entre les tôles à souder bord à bord et d'éviter l'ouverture du joint après le soudage de ces tôles.

**Revendications**

1. Procédé de soudage bord à bord de tôles (1, 2), au moyen d'un faisceau laser, dans lequel on exerce sur les tôles (1, 2) un effort F en direction du plan de joint (3) déterminé pour que la pression de contact P entre lesdites tôles, en tout point au niveau du plan de joint (3), soit comprise entre 0,05 fois la limite élastique Re de la tôle (1 ou 2) ayant la plus faible limite élastique et la pression de flambement Pf de la tôle (1 ou 2) ayant la pression de flambement minimale, un joint soudé étant réalisé au niveau du plan de joint (3) par fusion locale desdites tôles (1, 2) au moyen du faisceau laser.

**2.** Procédé de soudage selon la revendication 1, caractérisé en ce que la pression de contact P entre lesdites tôles (1, 2) est variable selon le point où elle s'exerce par rapport aux extrémités (6, 7) du plan de joint (3) desdites tôles.

**3.** Procédé selon les revendications 1 et 2, caractérisé en ce que la pression P entre les tôles (1, 2) a une valeur P2 plus importante aux points du plan de joint (3) présentant un jeu important qu'une valeur P1 aux points pour lesquels le jeu est minimum ou nul.

**4.** Procédé de soudage selon les revendications 1 et 2, caractérisé en ce que la pression de contact P entre les tôles (1, 2) a une valeur minimale P1 à proximité des extrémités (6, 7) du plan de joint (3) desdites tôles et une valeur maximale (P2) à proximité du centre dudit plan de joint (3).

**5.** Procédé de soudage selon l'une quelconque des revendications 1 à 4, caractérisé en ce que la pression minimale (P1) est égale à 0,05 fois la limite élastique Re de la tôle (1 ou 2) ayant la plus faible limite élastique et la pression maximale P2 est égale à la pression de flambement Pl de la tôle (1 ou 2) ayant la pression de flambement minimale.

**Claims**

**1.** A butt welding process for sheet metal (1, 2) using a laser beam, in which process a force F is exerted on the sheets (1, 2) in the direction of the seam plane (3), said force being so defined that the contact pressure P between said sheets at any point in the seam plane (3) is between 0.05 times the elastic limit Re of the sheet (1 or 2) having the lowest elastic limit and the buckling pressure Pf of the sheet (1 or 2) having the least buckling pressure, a welded joint being produced in the seam plane (3) by local melting of said sheets (1, 2) using a laser beam.

**2.** A welding process as claimed in claim 1, characterised in that the contact pressure P between said sheets (1, 2) varies according to the point at which it is exerted in relation to the extremities (6, 7) of the seam plane (3) of said sheets.

**3.** A process as claimed in claims 1 and 2, characterised in that the pressure P between the sheets (1, 2) has a value P2 which is greater at the points of the seam plane (3) where there is a large gap than a value P1 at the points where the gap is minimal or zero.

**4.** A welding process as claimed in claims 1 and 2, characterised in that the contact pressure P between the sheets (1, 2) has a minimum value P1 in proximity to the extremities (6, 7) of the seam plane (3) of said sheets and a maximum value (P2) in proximity to the centre of said seam plane (3).

**5.** A welding process as claimed in one of claims 1 to 4, characterised in that the minimum pressure (P1) is equal to 0.05 times the elastic limit Re of the sheet (1 or 2) having the lowest elastic limit, and the maximum pressure P2 is equal to the buckling pressure P1 [sic - Pf] of the sheet (1 or 2) having the least buckling pressure.

**Patentansprüche**

**1.** Verfahren zur Stumpfschweißung von Blechen (1, 2) mittels eines Laserstrahls, nach welchem man auf die Bleche (1, 2) eine Kraft F in Richtung auf die Verbindungsebene (3) ausübt, die so festgelegt ist, daß der Berührdruck P zwischen den Blechen an allen Punkten der Verbindungsebene (3) zwischen dem 0,05-fachen der Elastizitätsgrenze Re des Bleches (1 oder 2), das die geringste Elastizitätsgrenze hat, und dem Beuldruck Pf des Bleches (1 oder 2), das den kleinsten Beuldruck hat, liegt, wobei eine Schweißverbindung an der Verbindungsebene (3) durch lokales Schmelzen der Bleche (1, 2) mittels des Laserstrahls durchgeführt wird.

**2.** Schweißverfahren nach Anspruch 1, dadurch gekennzeichnet, daß der Berührdruck P zwischen den Blechen (1, 2) abhängig von der Stelle, wo er sich in Bezug auf die Enden (6, 7) der Verbindungsebene (3) der Bleche ausbildet, veränderlich ist.

**3.** Verfahren nach den Ansprüchen 1 und 2, dadurch gekennzeichnet, daß der Druck P zwischen den Blechen (1, 2) einen größeren Wert P2 an den Punkten der Verbindungsebene (3), die ein großes Spiel aufweisen, hat, als es ein Wert P1 an den Punkten, für welche das Spiel minimal oder null ist, ist.

**4.** Schweißverfahren nach den Ansprüchen 1 und 2, dadurch gekennzeichnet, daß der Berührdruck P zwischen den Blechen (1, 2) einen Minimalwert P1 in der Nähe der Enden (6, 7) der Verbindungsebene (3) der Bleche und einen Maximalwert (P2) in der Nähe der Mitte der Verbindungsebene (3) hat.

**5.** Schweißverfahren nach irgendeinen der Ansprüche 1 bis 4, dadurch gekennzeichnet, daß der Minimaldruck (P1) gleich dem 0,05-fachen der Elastizitätsgrenze Re des Bleches (1 oder 2), das die geringste Elastizitätsgrenze hat, und der Maximaldruck P2 gleich dem Beuldruck P1 des Bleches (1 oder 2), das den kleinsten Beuldruck hat, ist.

FIG.1

FIG.2

FIG.3